# EUROPEAN PATENT APPLICATION

(11) **EP 4 648 133 A1**
(43) Date of publication of application: **12.11.2025**
(21) Application number: 24382502.3
(22) Date of filing: 08.05.2024
(51) Int. Cl.: H01M 4/52, H01M 4/525, H01M 10/0525, H01M 10/0565, H01M 10/0568, H01M 10/0569

(54) **FLUORINATED SALT AS COMPONENT OF ELECTROLYTES FOR IMPROVING PERFORMANCE OF CELLS AND BATTERIES**

(71) Applicant: Fundación Centro de Investigación Cooperativa de Energías Alternativas, CIC Energigune Fundazioa, 01510 Vitoria-Gasteiz, Álava (ES)
(72) Inventor: ARMAND, Michel, E-01510 Vitoria-Gasteiz, Álava (ES); MARTÍNEZ IBÁÑEZ, Maria, E-01510 Vitoria-Gasteiz, Álava (ES); GARCÍA MAESTRE, Lorena, E-01510 Vitoria-Gasteiz, Álava (ES); ETXABE, Julen, E-01510 Vitoria-Gasteiz, Álava (ES); SANTAMARIA OLIVERA, Cristina, E-01510 Vitoria-Gasteiz, Álava (ES); FRAILE INSAGURBE, David, E-01510 Vitoria-Gasteiz, Álava (ES)
(74) Representative: ABG Intellectual Property Law, S.L.

(57) **Abstract**

The present invention relates to an electrochemical cell comprising:
a) an electrolyte comprising a salt of formula (I): 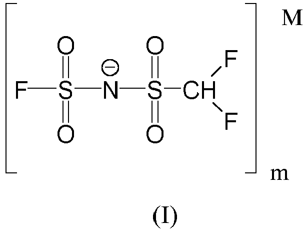 wherein:
M is a metal cation or an organic cation; and
the subscript "m" is a positive integer number that refers to the number of anions needed to neutralize the charge of the cation M;
wherein the electrolyte is liquid, gel or solid, and further characterized in that the electrolyte does not comprise a fluorinated ether when the electrolyte is liquid or gel;
and

b) a metal anode.

The invention also relates to an electrochemical battery comprising said electrochemical cell and uses thereof.

## Description

### FIELD OF THE INVENTION

The present invention relates to the field of electrochemical cells and may find widespread application in energy storage and electronic devices.

### BACKGROUND

Portable electronic devices are currently being used on a daily basis and are gaining popularity. In this regard, numerous efforts are being made in developing new technologies aiming at improving the energy efficiency of said devices. Certain aspects are the object of intensive research and relate to the capacity of the battery of said devices to store large amounts of energy over the whole useful lifetime of the device. In particular, it is not only necessary that the battery is suitable for storing a large amount of energy but it is also necessary that this capacity is preserved when the battery is submitted to frequent charge and discharge cycles. The charge capacity and capacity retention of a battery depends on a large range of parameters, each of which may be independently optimized, including the cathode material and structure, the nature of the electrolyte (or diaphragm) and the anode material.

In this regard, different types of electrolytes have been developed, namely liquid, gel and solid electrolytes, with the aim of providing, among other properties, high safety as well as high-performance rechargeable metal-based batteries. Furthermore, preventing the formation of dendrites on the electrode surface while favoring the uniform deposition of metal on the anode, is also a very demanding feature that has been extensively studied, more particularly in the case of solid electrolytes.

The electrolytes comprise a salt containing a metal cation which is soluble in the constituent matrix of the electrolyte, whether liquid, gel or solid, with which it interacts via non-covalent interactions (e.g. Van der Waals and/or hydrophobic interactions). The strength of these interactions impacts directly on the capacity of the electrolyte to transport metal cations. In fact, one of the most critical parameters is the nature of salt anions since they play a pivotal role in dictating the electrochemical performance of batteries. Different salts have been reported in the art as being useful for the formulation of electrolytes, most of them are salts having lithium as metal cation.

Among them, bis(trifluoromethanesulfonyl)imide lithium salt (LiTFSI) has been the most widely studied as conducting salt owing to the sulfonimide (-SO₂-N-SO₂-) group. The high flexibility of this group enhances the ionic conductivity by reducing the crystallinity of polyethylene oxide matrices due to the plasticizing effect. Moreover, the outstanding thermal and electrochemical stability of this LiTFSI, as well as the highly delocalized charge distribution promoting the dissociation of Li⁺ cation due to the flexible S-N bond, make this salt suitable for developing reliable SPEs for Li°-based batteries [Gorecki et al., J. Phys.: Condens. Matter, 1995, 7, 34 6823; Marzantowicz, et al., Electrochim. Acta, 2005, 50, 3969]. However, the solid-electrolyte interphase (SEI) layers formed between the LiTFSI/PEO electrolyte and Li° anode are not stable enough thereby resulting in an inferior cycling performance of the battery.

Lithium bis(fluorosulfonyl)imide (Li[N (SO₂F)₂], LiFSI), an analogue ofLiTFSI, has also been widely studied due to the improved compatibility with various electrodes, such as lithium iron phosphate (LiFePO₄, LFP) or lithium cobalt oxide (LiCoO₂) cathodes and Li° electrode. The enhanced stability with Li° anode is attributed to the formation of LiF-rich solid electrolyte interphase (SEI) layer resulting in a stable cycling performance [Zhang, et al, Electrochim. Acta, 2014, 133, 529; Judez, X. et al., Solid State Ionics, 2018, 318, 95; Aldalur, I., et al., J. Power Sources, 2018, 383, 144.].

The (fluorosulfonyl)(trifluoromethanesulfonyl)imide anions ([N(SO₂F)(SO₂CF₃)]⁻, FTFSI⁻) used in Li-S cells revealed high specific and areal capacity with good Coulombic efficiency (CE) because of the synergistic effects resulting from its molecular structure (i.e., possessing both -SO₂CF₃ and -SO₂F functionalities) [Eshetu, G.G. et al., J. Am. Chem. Soc., 2018, 140 (31), 9921-9933]. However, LiFTFSI is susceptible to water, aprotic solvents, and heat, limiting the scalable preparation of its electrolytes, and the stability of the Li° electrode still needs to be improved for long-term cycling.

Zhang et al., [Angewandte Chemie Int. Ed. 2019, 58(23), 7829-7834] disclose an alternative salt, analogous salts to LiTFSI, whereby one or more of the F atoms are replaced with H atoms, and more particularly the lithium salt (difluoromethanesulfonyl) (trifluoromethanesulfonyl) imide (LiDFTFSI). The compound showed to effectively enhance the Li-ion conductivity of electrolytes based on polyethylene oxide if compared with LiTFSI, while not affecting significantly the overall conductivity of the electrolyte, thus teaching that this compound is useful as component of a polymer electrolyte.

Along the same line of argument, Zhang et al. [Joule, 2019, 3(7), 1689-1702] further teach that said lithium salt LiDFTFSI forms a passivation layer comprising lithium fluoride and lithium hydride on the Li° anode which contributes in improving long-term cyclability of the battery by preventing the formation of lithium dendrites on the anode observed with other lithium salts such as LiTFSI.

In addition, Qiao L. et al. [Nature Materials, 2022, 21, 455-462] disclose an electrolyte composition comprising a mixture of organic carbonates and lithium (difluoromethyl(trifluoromethyl)sulfonamide (LiDFTFSI) as lithium salt. It is mentioned that the presence of LiDFTFSI as lithium salt endows a lithium cell with superior cycling stability and capacity retention, demonstrating the decisive role of the salt anion in dictating the electrochemical performance of rechargeable lithium metal batteries.

However, CF₃-containing substances are known to be resistive towards chemical and biochemical degradation. This raises considerable risks to environment and human health once the salts or their decomposition products leak out of the battery pack or are poorly disposed of. In view of that, Qiao et al. [Energy Storage Materials, 2020, 32, 225-233] propose a CF₃-free anion, in particular, bis(difluoromethanesulfonyl) imide ([N(SO₂CF₂H)₂]-, DFSI-), having the de-fluorinated -CF₂H moieties which generally possess better chemical and biochemical degradability. It was shown that this salt with two defluorinated -CF₂H moieties could be easily hydrolyzed under mild basic conditions, and is likely non-persistent in the environment. The conductivity of DFSI is however substantially lower than that of TFSI.

Despite the advances in the field, there is still a need for providing improved salts to be used in electrolyte compositions for metal batteries, in particular salts for metal batteries having a high degree of retention of charge capacity upon cycling, for metal batteries operating at high voltages and/or low temperatures, and/or electrolytes inducing less corrosion when used in said metal batteries.

### BRIEF DESCRIPTION OF THE INVENTION

The present invention relates to an electrochemical cell comprising an electrolyte, said electrolyte comprising a particular fluorinated salt, in combination with a metal anode. Said salt provides a synergistic effect resulting from the combination of -CF₂H and -F moieties in one single molecule leading to a more robust and conductive solid electrolyte interface (SEI) in contact with the metal of the anode. Furthermore, the inventors have found that the presence of said fluorinated salt in the electrolyte maintains high discharge capacity and coulombic efficiency (CE) after multiple charge/discharge cycles and, on top of that, advantageous properties, such as higher thermal stability of the electrolyte compared to electrolytes containing other salts such as LiFSI, were found.

Thus, a first aspect of the invention refers to an electrochemical cell comprising:
a) an electrolyte comprising a salt of formula (I): 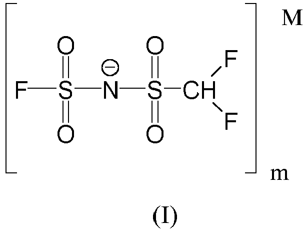 wherein:
   M is a metal cation or an organic cation; and
   the subscript "m" is a positive integer number that refers to the number of anions needed to neutralize the charge of the cation M;
   wherein the electrolyte is liquid, gel or solid, and further characterized in that the electrolyte does not comprise a fluorinated ether when the electrolyte is liquid or gel;
   and
b) a metal anode.

In a particular embodiment, the electrolyte is solid and it further comprises a polymer composition.

A second aspect of the invention refers to an electrochemical battery comprising the electrochemical cell of the invention as defined above.

A further aspect of the invention refers to the use of the electrochemical cell or battery of the first and second aspect of the invention in electric motors; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; and electric power storage systems.

### DESCRITPION OF THE FIGURES

Figure 1 shows the discharge capacity and Coulombic efficiency at 70 °C of PEO/LiTFSI (1A) and PEO/LiFDFSI (1B).
Figure 2 shows the thermogravimetric analysis and decomposition temperature (5% mass loss) of membranes of PEO and lithium salts in a EO/Li ratio of 20: 1.

### DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

Throughout the description and claims the word "comprises" and variations of the word, are not intended to exclude other technical features, additives, components or steps. Furthermore, the word "comprise" encompasses the cases of "consist of" and "consists essentially of". Additional objects, advantages and features of the invention will become apparent to those skilled in the art upon examination of the description or may be learned by practice of the invention.

Throughout the description and claims, the terms "blend(s)" and "mixture(s)" will be used interchangeably.

As mentioned above, a first aspect of the invention refers to an electrochemical cell comprising:
a) an electrolyte comprising a salt of formula (I): 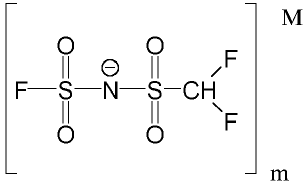 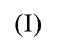 wherein:
   M is a metal cation or an organic cation; and
   the subscript "m" is a positive integer number that refers to the number of anions needed to neutralize the charge of the cation M;
   wherein the electrolyte is liquid, gel or solid, and further characterized in that the electrolyte does not comprise a fluorinated ether when the electrolyte is liquid or gel;
   and
b) a metal anode.

More embodiments regarding the first aspect of the invention will be given below.

The electrolyte comprised in the electrochemical cell of the invention may be a liquid electrolyte, a gel electrolyte or a solid electrolyte.

In the context of the present invention, a "liquid electrolyte" should be understood as an electrolyte in liquid state wherein the salt of formula (I) is dissolved in an organic solvent or an ionic liquid.

By the term "gel electrolyte" should be understood a gel polymer electrolyte which is a non-fluid polymer network expanded or swollen in a fluid. The gel electrolyte may contain, for example, a polymer composition.

The term "solid electrolyte" refers to a solvent-free polymer electrolyte, i.e. a polymer electrolyte comprising less than 5 wt% of a solvent with respect to the weight of the electrolyte. In particular, the electrolyte of the invention is solvent-free, i.e. no solvent is present. The term "solvent" refers to any compound liquid at room temperature (25 °C). The solid polymer electrolyte contains a polymer matrix where the salt of formula (I) is incorporated.

The electrolyte of the electrochemical cell is further characterized in that a fluorinated ether is absent when the electrolyte is liquid or gel.

In a particular embodiment, when the electrolyte is solid, it is characterized in that it nor does comprise a fluorinated ether, particularly a liquid fluorinated ether.

### Salt

As stated above, the electrolyte contained in the electrochemical cell of the invention comprises a salt of formula (I). The cation M of said salt is a metal cation.

In a particular embodiment, the metal cation M has a valency equal to 1, 2 or 3, and is selected from ions of alkali metals, of alkaline earth metals, of transition metals or of rare-earth metals. Therefore, within this particular embodiment, subscript "m" is 1, 2 or 3, respectively.

In a preferred embodiment, M is a cation of an alkali metal, that is, a metal of the group 1 of the periodic table that forms a monovalent cation M⁺. In a preferred embodiment, M is a cation of an alkali metal selected from Li⁺, Na⁺, K⁺ and Cs⁺. More preferred cations of alkali metals are Li⁺, Na⁺ and K⁺. Even more preferably, the cation of the alkali metal is Li+ or Na+, even much more preferably the cation of the alkali metal is Li⁺, and therefore subscript "m" is 1.

In another embodiment, M is cation of an alkaline earth metal, that is, a metal of the group 2 of the periodic table that forms a divalent metal cation M²⁺. In a preferred embodiment, the cation of the alkaline earth metal is selected from Mg²⁺, Ca²⁺ and Ba²⁺, and therefore subscript "m" is 2.

In another embodiment, M is cation of a transition metal with a valency comprised between 1 and 3. In a preferred embodiment, M is a cation of a transition metal selected from the group consisting of Cu²⁺, Zn²⁺, Fe²⁺ and Re³⁺, and therefore subscript "m" is 3.

In a preferred embodiment, the cation M is selected from the group of metal cations consisting of K⁺, Li⁺, Na⁺, Cs⁺, Mg²⁺, Ca²⁺, Ba²⁺, Cu²⁺, Zn²⁺, Fe²⁺ or Re³⁺.

The salt of formula (I) can be prepared by nucleophilic addition reaction in a 1:1 molar ratio of sulfamoyl fluoride (FSO₂NH₂) to difluoromethanesulfonyl chloride (CHF₂SO₂Cl), followed by reacting the acidic form thereof with a compound containing the required cation of the salt.

In a particular embodiment, the preparation of the corresponding salt can be carried out by reacting the acidic form of the product resulting from reacting (FSO₂NH₂) and (CHF₂SO₂Cl), with a carbonate of said metal, or with a carbonate of other metal followed by cation exchange.

In a preferred embodiment, the electrolyte is a solid electrolyte. In this embodiment, the electrolyte further comprises a polymer composition, i.e. it is a solid polymeric electrolyte. By the term polymer composition should be understood at least one polymer and/or cross-linkable monomers that upon polymerization reactions provides a solid cross-linked polymer matrix.

Suitable polymers are known in the art and typically comprise a heteroatom such as O, N, S or P in the repeating unit of the polymer chain that is suitable for interacting with a cation through a lone pair of the heteroatom.

The at least one polymer may be a homopolymer, a copolymer or a mixture thereof. In a further embodiment, the polymer is in the form of a cross-linked polymer or in the form of a cross-linkable polymer composition. In a further embodiment, the polymer may comprise in its molecular formula one or more cross-linkable functional groups.

In the context of the present invention, cross-linkable monomers relates to those monomers having one or more cross-linkable functional groups which, upon polymerization reaction, they lead to a cross-linked polymer matrix.

In a particular embodiment, the polymer composition is at least one polymer selected from a polyalkylene oxide, such as polyethylene oxide (PEO) or polypropylene oxide (PPO); a polyalkylenimine, such as polyethyleneimine (PEI); a polyalkylene sulphide, such as polyethylene sulphide (PES); a poly(meth)acrylate, in particular a polyalkylacrylate or an alkyl ester thereof, such as polymethylmethacrylate (PMMA), poly(butyl acrylate) (PBA), poly(ethyl) acrylate (PEA), poly(cyanoethylacrylate) (PCEA), or blends thereof, or co-polymers thereof or cross-linked polymers thereof with trimethylolpropane triacrylate- (ETPTA) and/or pentaerythritol tetraacrylate (PETA); a polyethyleneglycol optionally comprising one or more cross-linkable groups, such as poly(ethyleneglycol), poly(ethyleneglycol) methacrylate (PEGMA), poly(ethyleneglycol)methyl ether methacrylate, poly(ethyleneglycol) dimethacrylate (PEGDMA) or blends thereof, or co-polymers thereof or cross-linked polymers thereof; a polyphosphazene, such as poly[bis(2-(2-methoxyethoxy) ethoxy) phosphazene (MEEP); a polysiloxane, such as poly(dimethyl siloxane) (PDMS); polyvinyl alcohol (PVA); polyvinyl amine (PVAm); polyvinyl acetate (PVAc); a polyvinyl halide, such as polyvinyl chloride (PVC) or polyvinylidene difluoride (PVdF); polyvinylidene difluoride-hexafluropropylene (PVdF-HFP); polyacrylonitrile (PAN); poly(vinylpyrrolidone) (PVP); poly(2-vinylpyridine) (P2VP); a polyester, such as poly(ε-caprolactone) (PCL); a polycarbonate, such as polypropylene carbonate) (PPC), polypropylene carbonate) (PPC) and/or poly(trimethylene carbonate) (PTMC); a poly(maleimide), preferably poly(alkylenemaleimide), more preferably poly(ethylene-alt-maleimide) (PEaMI); polyaniline (PANI); chitosan (CS); or any blend or any copolymer or any cross-linked polymer thereof. As in any of the examples above, the polymer may comprise in its molecular formula at least one cross-linkable functional group, such as (meth)acrylate, epoxy, alkene, thiol, amino, hydroxyl and others cross-linkable functional groups known in the art.

In a preferred embodiment, the at least one polymer is a polyalkylene oxide, such as polyethylene oxide (PEO), polypropylene oxide (PPO) or blends thereof; more preferably the polymer is polyethylene oxide (PEO).

In another particular embodiment, the polymer composition is a mixture of cross-linkable monomers, at least one of the monomers comprising in its molecular formula at least one cross-linkable functional group and the other monomer(s) comprising at least two cross-linkable groups. Examples of such cross-linkable groups are (meth)acrylate, epoxy, alkene, thiol, amino, hydroxyl and others cross-linkable functional groups known in the art. Preferably, the cross-linkable monomers contain (meth)acrylate groups as cross-linkable functional groups, for example, butyl acrylate, trimethylolpropane triacrylate (ETPTA) or pentaerythritol tetraacrylate (PETA).

When the at least one polymer comprises in its molecular formula one or more cross-linkable groups and/or when cross-linkable monomers are used, such as one or more cross-linkable acrylate groups, the electrolyte further comprises an initiator of free radical polymerization, such as azoisobutyronitrile (AIBN).

The solid electrolyte can be prepared by a process comprising
(i) providing a solution of a salt of formula (I) as defined above;
(ii) adding at least one polymer composition as defined above to the solution of step (i);
(iii) mixing the salt and the polymer composition;
(iv) casting the resulting mixture in a mould and evaporating the solvent; and
(v) optionally, when the polymer composition comprises at least one polymer having one or more cross-linkable functional groups or cross-linkable monomers, cross-linking the polymer or the cross-linkable monomers comprised in the polymer composition.

In an embodiment, step (i) is carried out by dissolving the salt of formula (I) in an organic solvent, preferably in a polar organic solvent. Examples of organic solvents suitable for dissolving the salt include, but are not limited to, acetonitrile (ACN), tetrahydrofuran (THF), 2-methyltetrahydrofuran, dimethylformamide (DMF), N-methyl-2-pyrrolidone (NMP) or acetone.

In step (ii), the polymer composition can be added as neat solid or, alternatively, the polymer composition can be previously dissolved in a solvent, wherein said solvent is removed subsequently under vacuum and applying temperature.

It is preferable that the mixture obtained from step (iii) is stirred for a certain time to ensure that a homogeneous solution is obtained (i.e. no suspended matter is present). The stirring is performed magnetically at 100 rpm, at 200 rpm, at 300 rpm, at 400 rpm, at 500 rpm, at 600 rpm, at 700 rpm, at 800 rpm, at 900 rpm, at 1000 rpm; preferably the stirring is performed in a range between 100 and 500 rpm, even more preferably at about 300 rpm. Additionally, the mixture from step (iii) is stirred for at least 5 min, at least 15 min, at least 30 min, at least 1 hour, at least 2 hours, at least 4 hours, at least 6 hours, at least 12 hours, at least 1 day; preferably, the mixture from step (iii) is stirred for 5 to 24 hours, more preferably for 12 hours.

Steps (i) to (iii) of the method above can be performed at a temperature comprised between 10 and 50 °C, preferably between 15 and 30 °C, even more preferably between 20 and 25 °C.

In step (iv), the homogeneous mixture resulting from step (iii) is poured into a mould and then allowed to solidify by evaporation of the solvent.

When the polymer composition comprises one or more polymers having cross-linkable functional groups or a mixture of cross-linkable monomers, the preparation of the solid electrolyte further includes in step (v) the cross-linking of the polymer or of the cross-linkable monomers by thermal or photo radical polymerization using an initiator of free radical polymerization as mentioned above.

In another particular embodiment, the electrolyte is a gel electrolyte. As mentioned above, in this case, the electrolyte has a polymeric network expanded or swollen in a fluid or solvent. Thus, the gel electrolyte further comprises, in addition to the salt of formula (I), a polymer composition and a fluid or solvent. By the term polymer composition should be understood at least one polymer and/or cross-linkable monomers.

Suitable polymer compositions to be used in the gel electrolyte are those mentioned above for the formulation of the solid electrolyte.

In the gel electrolyte, the fluid or solvent where the polymer composition is expanded or swollen may include at least one organic solvent selected from dialkyl carbonates, cyclic carbonates, linear or cyclic esters, linear or cyclic amides, aliphatic nitriles, sulfone compounds, linear or cyclic ethers, and derivatives thereof.

More particularly, the fluid or organic solvent may include at least one selected from dimethyl carbonate (DMC), diethyl carbonate (DEC), ethylmethyl carbonate (EMC), methylpropyl carbonate, ethylpropyl carbonate, methylisopropyl carbonate, dipropyl carbonate, dibutyl carbonate, propylene carbonate (PC), ethylene carbonate (EC), fluoroethylene carbonate (FEC), difluoroethylene carbonate (DFEC), butylene carbonate, 1,2-dimethoxyethane, diethylene glycol dimethylether, triethylene glycol dimethylether, tetraethylene glycol dimethylether, polyethylene glycol dimethylether, dimethyl sulfone, ethylmethyl sulfone, diethyl sulfone, tetrahydropyran (THP), 1,1,2,2-tetrafluoroethyl-2,2,3,3-tetrafluoropropyl ether, ethylpropionate, diethylether, methyl-tert-butylether, ethylbutyrate, benzonitrile, acetonitrile, tetrahydrofuran, 2-methyltetrahydrofuran, gamma-valerolactone, gamma-butyrolactone, succinonitrile (SN), glutaronitrile (GN), adiponitrile (AN), N,N-dimethylsulfamoyl fluoride (FSA), N,N-dimethyltrifluoromethane-sulfonamide (TFSA), N-methyl-2-pyrrolidinone, dioxolane, 4-methyldioxolane, N,N-dimethylformamide, N,N-dimethylacetamide, dimethyl sulfoxide, dioxane, sulfolane, dichloroethane, chlorobenzene, and nitrobenzene, but is not limited thereto.

In another particular embodiment, the fluid or solvent where the polymer composition is expanded or swollen may include at least one ionic liquid, said ionic liquid comprising i) at least one cation selected from ammonium, imidazolium, pyridinium, piperidinium, pyrazolium, pyrrolidinium, pyrimidinium, piperazinium, guanidinium, tetramethylguanidinium, 1,4-diaza-bicyclo[2,2,2] octane, 1,8-Diazabicyclo(5.4.0)undec-7-ene and phosphonium, where the nitrogen or at least one nitrogen in the ammonium, imidazolium, pyridinium, piperidinium, pyrazolium, pyrrolidinium, pyrimidinium or piperazinium, or the phosphorous, can be bonded to at least one alkyl, cycloalkyl, aryl or arylalkyl radical, and ii) at least one anion selected from BF4-, PF6-, AsF6-, SbF6-, AlCl4-, HSO4-, CH3SO3-, CF3CO2-, (CF3SO2)2N-, (CHF2SO2)2N-, (CF3SO2) (CHF2SO2)N-, (FSO2) (CF3SO2)N-, (FSO2)(CHF2SO2)N-, (FSO2)2N-, (CN)2N-, (CN)3C-, Cl-, Br-, I-, SO42-, CF3SO3-, (C2F5SO2)2N-, (C2F5SO2)(CF3SO2)N-, NO3-, Al2Cl7-, CH3COO-, (CF3SO2)3C-, (CF3)2PF4-, (CF3)3PF3-, (CF3)4PF2-, (CF3)5PF-, (CF3)6P-, SF5CF2SO3-, SF5CHFCF2SO3-, CF3CF2(CF3)2CO-, (CF3SO2)2CH-, (SF5)3C-, and (O(CF3)2C2(CF3)2O)2PO-.

In a more preferred embodiment, the organic cation is selected from tetramethyl ammonium; tetraethyl ammonium; tetrapropyl ammonium; tetrabutyl ammonium; butyltrimethyl ammonium; tetrahexyl ammonium; tetraamyl ammonium; tetraheptyl ammonium; tetra n-octyl ammonium; tributylmethyl ammonium; trimethylpropyl ammonium; amyltriethylammonium; butyltrimethylammonium; benzylethyldimethylammonium; cyclohexyltrimethylammonium; diethylmethylpropylammonium; ethyl(dimethyl)(2-phenylethyl)-ammonium; methyltrin-octylammonium; 1-methyl imidazolium; 1-butyl-3-methyl imidazolium; 1-ethyl-3-methyl imidazolium; 1,3-dimethyl imidazolium; 1,3-diethyl imidazolium; 1-butyl, 2,3-dimethyl imidazolium; N-methyl pyridinium; N-ethyl pyridinium; N-butyl pyridinium; 1-butyl pyrrolidinium; 1-ethyl pyrrolidinium; N-ethyl piperidinium; N-butyl piperidinium; 1,1-dimethyl piperidinium; 1,1-diethyl piperidinium; 1,1-dibutyl piperidinium; 1-butyl-1-methylpiperidinium; 1-methyl-1-propyl piperidinium; 1-butyl-1-methyl pyrrolidinium; 1-ethyl-1-methyl pyrrolidinium; 1-methyl-1-propyl pyrrolidinium; 1-methyl-1-octyl pyrrolidinium; 1-methyl-1-pentyl pyrrolidinium; tetrabutyl phosphonium; TMG (tetramethylguanidinium), DBU (1,8-Diazabicyclo[5.4.0]undec-7-enium), DABCO (1,4-etilenpiperazinium) tributylmethyl phosphonium; tributylethyl phosphonium; tributylhexylphosphonium; tributyl-n-octylphosphonium and tributylhexadecyl phosphonium.

In a particularly preferred embodiment, the cation M is a polyonium cation. In a preferred embodiment the polyonium cation is a polyammonium, polypyrrolidinium, polyimidazolium, polyimidazolinium cation, preferably a polyammonium, polyimidazolium, or polyimidazolinium cation.

The gel electrolyte may be prepared by first dissolving the salt of formula (I) in the fluid or solvent prior to the addition of the polymer composition. The polymer composition can be added as neat solid or, alternatively, the polymer composition can be previously dissolved in a solvent, wherein said solvent can be removed subsequently (if needed) under vacuum and applying temperature. When the polymer composition comprises one or more polymers having cross-linkable functional groups or a mixture of cross-linkable monomers, the preparation of the gel electrolyte further includes the cross-linking of the polymer or of the cross-linkable monomers by thermal or photo radical polymerization using an initiator of free radical polymerization as mentioned above.

In another particular embodiment of the invention, the electrolyte of the electrochemical cell is a liquid electrolyte. As mentioned above, when the electrolyte is liquid, the salt of formula (I) is dissolved in an organic solvent or an ionic liquid.

In a particular embodiment, the organic solvent may include at least one selected from dialkyl carbonates, cyclic carbonates, linear or cyclic esters, linear or cyclic amides, aliphatic nitriles, sulfone compounds, linear or cyclic ethers, and derivatives thereof.

The organic solvent may include at least one selected from dimethyl carbonate (DMC), diethyl carbonate (DEC), ethylmethyl carbonate (EMC), methylpropyl carbonate, ethylpropyl carbonate, methylisopropyl carbonate, dipropyl carbonate, dibutyl carbonate, propylene carbonate (PC), ethylene carbonate (EC), fluoroethylene carbonate (FEC), difluoroethylene carbonate (DFEC), butylene carbonate, 1,2-dimethoxyethane, diethylene glycol dimethylether, triethylene glycol dimethylether, tetraethylene glycol dimethylether, polyethylene glycol dimethylether, dimethyl sulfone, ethylmethyl sulfone, diethyl sulfone, tetrahydropyran (THP), 1,1,2,2-tetrafluoroethyl-2,2,3,3-tetrafluoropropyl ether, ethylpropionate, diethylether, methyl-tert-butylether, ethylbutyrate, benzonitrile, acetonitrile, tetrahydrofuran, 2-methyltetrahydrofuran, gamma-valerolactone, gamma-butyrolactone, succinonitrile (SN), glutaronitrile (GN), adiponitrile (AN), N,N-dimethylsulfamoyl fluoride (FSA), N,N-dimethyltrifluoromethane-sulfonamide (TFSA), N-methyl-2-pyrrolidinone, dioxolane, 4-methyldioxolane, N,N-dimethylformamide, N,N-dimethylacetamide, dimethyl sulfoxide, dioxane, sulfolane, dichloroethane, chlorobenzene, and nitrobenzene, but is not limited thereto. Any organic solvent available in the art may be used in the organic solvent.

In an embodiment, the amount of the salt of formula (I) in the liquid electrolyte may range from about 0.1 moles per liter (M) to about 7 M based on the organic solvent. For example, the amount of the salt may range from 0.5 M to 5 M based on the organic solvent. For example, the amount of the salt may range from 1 M to 3 M based on the organic solvent.

The liquid electrolyte may be prepared by simple dissolution of the salt of formula (I) in the corresponding amount of the organic solvent at room temperature.

In a particular embodiment, the liquid electrolyte may also comprise an ionic liquid as defined above for the gel electrolyte.

### Metallic anode

The electrochemical cell of the present invention also comprises a metal anode.

In the context of the present invention, by the term "metal anode" should be understood an anode suitable for reversibly incorporating metal cations, preferably alkali metal cations, and more preferably lithium cations.

The incorporation of the metal cations in the anode can occur by different mechanisms depending on the specific anode active material the anode comprises. Typical mechanisms are plating of the metal cation onto the anode, wherein the anode itself may comprise the same metal cation, such as the plating of lithium cations onto a metallic lithium anode, or wherein the anode may not comprise the same metal cation, such as the plating of lithium cations onto a copper foil

In another embodiment, the anode comprises the metal cations, preferably alkali metal cations, and more preferably lithium cations. In a particular embodiment, the anode is an anode obtainable from the incorporation of the metal cations by any of the above-mentioned incorporation mechanisms.

In a preferred embodiment, the anode is an alkali metal anode, and more preferably a lithium metal anode. Even more preferably, the anode consists essentially of metallic lithium.

### Fluorinated ether

The electrolyte comprised in the electrochemical cell of the invention is further characterized in that it does not comprise a fluorinated ether when the electrolyte is liquid or gel. When the electrolyte is solid, the fluorinated ether can be present in the electrolyte composition provided that said fluorinated ether is solid.

By the term "fluorinated ether" should be understood an ether or a glycol ether having at least one fluorine as substituent in the hydrocarbon chain, more particularly having at least one terminally fluorine in the hydrocarbon chain. The fluorinated ether may be symmetric or asymmetric.

In a particular embodiment, the fluorinated ether has formula (I) or (II):

R¹-O-R² (I)

R³-(O(CH₂)ₘ)ₓ-O-R⁴ (II)

wherein:
R¹, R², R³ and R⁴ are independently a C₁-C₈ alkyl, provided that at least one of R¹ and R² and one of R³ and R⁴ is substituted with at least one fluorine atom;
m is 1, 2 or 3;
x is 1, 2, 3, 4, 5, 6, 7, 8, 9 or 10.

The term "C₁-C₈ alkyl" refers to a linear or brunched alkyl group having from 1 to 8 carbon atoms. Examples of straight chain alkyl groups include methyl, ethyl, n-propyl, n-butyl, n-pentyl, n-hexyl, n-heptyl and n-octyl groups. Examples of branched alkyl groups include, but are not limited to, isopropyl, sec-butyl, t-butyl, neopentyl and isopentyl groups.

In a more particular embodiment, at least one of R¹ and R² and one of R³ and R⁴ is selected from -CFH₂; -CF₂H; -CF₃; -CF₂CF₃; -CF₂CHF₂; -CF₂CH₃; -CF₂CH₂F; -CHFCF₃; - CHFCHF₂; -CHFCH₃; -CHFCH₂F; -CH₂CF₃; -CH₂CHF₂; -CH₂CH₂F; -CF(CF₃)₂; - CH(CF₃)₂; -CF₂CF₂CF₃; -CF₂CF₂CHF₂; -CF₂CF₂CH₃; -CF₂CF₂CH₂F; -CH₂CF₂CF₃; - CH₂CF₂CHF₂; -CH₂CF₂CH₃; -CH₂CF₂CH₂F; -CHFCF₂CF₃; -CHFCF₂CHF₂; - CHFCF₂CH₃; -CHFCF₂CH₂F; -CF₂CH₂CF₃; -CF₂CH₂CHF₂; -CF₂CH₂CH₃; - CF₂CH₂CH₂F; -CF₂CHFCF₃; -CF₂CHFCHF₂; -CF₂CHFCH₃; -CF₂CHFCH₂F; - CHFCHFCF₃; -CHFCHFCHF₂; -CHFCHFCH₃; -CHFCHFCH₂F; CH₂CH₂CF₃; - CH₂CH₂CHF₂; -CH₂CH₂CH₂F; -CF₂CF₂CF₂CF₃; -CF₂CF₂CF₂CH₃; -CF₂CF₂CF₂CHF₂; - CF₂CF₂CF₂CH₂F; -CH₂CF₂CF₂CF₃; -CH₂CF₂CF₂CH₃; -CH₂CF₂CF₂CHF₂; - CH₂CF₂CF₂CH₂F; -CHFCF₂CF₂CF₃; -CHFCF₂CF₂CH₃; -CHFCF₂CF₂CHF₂; - CHFCF₂CF₂CH₂F; -CF₂CH₂CF₂CF₃; -CF₂CH₂CF₂CH₃; -CF₂CH₂CF₂CHF₂; - CF₂CH₂CF₂CH₂F; -CF₂CHFCF₂CF₃; -CF₂CHFCF₂CH₃; -CF₂CHFCF₂CHF₂; - CF₂CHFCF₂CH₂F; -CHFCHFCF₂CF₃; -CHFCHFCF₂CH₃; -CHFCHFCF₂CHF₂; - CHFCHFCF₂CH₂F; -CH₂CH₂CF₂CF₃; -CH₂CH₂CF₂CH₃; -CH₂CH₂CF₂CHF₂; - CH₂CH₂CF₂CH₂F; -CF₂CF₂CF₂CF₂CF₃; -CH₂CF₂CF₂CF₂CF₃; -CF₂CF₂CF₂CF₂CHF₂; - CH₂CF₂CF₂CF₂CHF₂; -CF₂OCFH₂; -CF₂OCF₂H; -CF₂OCF₃; -CF₂OCF₂CF₃; - CF₂OCF₂CHF₂; -CF₂OCF₂CH₃; -CF₂OCF₂CH₂F; -CF₂OCHFCF₃; -CF₂OCHFCHF₂; - CF₂OCHFCH₃; -CF₂OCHFCH₂F; -CF₂OCH₂CF₃; -CF₂OCH₂CHF₂; -CF₂OCH₂CH₂F; - CH₂OCFH₂; -CH₂OCF₂H; -CH₂OCF₃; -CH₂OCF₂CF₃; -CH₂OCF₂CHF₂; -CH₂OCF₂CH₃; -CH₂OCF₂CH₂F; -CH₂OCHFCF₃; -CH₂OCHFCHF₂; -CH₂OCHFCH₃; - CH₂OCHFCH₂F; -CH₂OCH₂CF₃; -CH₂OCH₂CHF₂; -CH₂OCH₂CH₂F; -CHFOCFH₂; - CHFOCF₂H; -CHFOCF₃; -CHFOCF₂CF₃; -CHFOCF₂CHF₂; -CHFOCF₂CH₃; - CHFOCF₂CH₂F; -CHFOCHFCF₃; -CHFOCHFCHF₂; -CHFOCHFCH₃; - CHFOCHFCH₂F; -CHFOCH₂CF₃; -CHFOCH₂CHF₂; or -CHFOCH₂CH₂F.

Even more preferably, R¹, R², R³ and R⁴ is independently selected from -CFH₂; -CF₂H; - CF₃; -CF₂CF₃; -CF₂CHF₂; -CF₂CH₃; -CF₂CH₂F; -CHFCF₃; -CHFCHF₂; -CHFCH₃; - CHFCH₂F; -CH₂CF₃; -CH₂CHF₂; -CH₂CH₂F; -CF(CF₃)₂; -CH(CF₃)₂; -CF₂CF₂CF₃; - CF₂CF₂CHF₂; -CF₂CF₂CH₃; -CF₂CF₂CH₂F; -CH₂CF₂CF₃; -CH₂CF₂CHF₂; -CH₂CF₂CH₃; -CH₂CF₂CH₂F; -CHFCF₂CF₃; -CHFCF₂CHF₂; -CHFCF₂CH₃; -CHFCF₂CH₂F; - CF₂CH₂CF₃; -CF₂CH₂CHF₂; -CF₂CH₂CH₃; -CF₂CH₂CH₂F; -CF₂CHFCF₃; - CF₂CHFCHF₂; -CF₂CHFCH₃; -CF₂CHFCH₂F; -CHFCHFCF₃; -CHFCHFCHF₂; - CHFCHFCH3; -CHFCHFCH₂F; CH₂CH₂CF₃; -CH₂CH₂CHF₂; -CH₂CH₂CH₂F; - CF₂CF₂CF₂CF₃; -CF₂CF₂CF₂CH₃; -CF₂CF₂CF₂CHF₂; -CF₂CF₂CF₂CH₂F; - CH₂CF₂CF₂CF₃; -CH₂CF₂CF₂CH₃; -CH₂CF₂CF₂CHF₂; -CH₂CF₂CF₂CH₂F; - CHFCF₂CF₂CF₃; -CHFCF₂CF₂CH₃; -CHFCF₂CF₂CHF₂; -CHFCF₂CF₂CH₂F; - CF₂CH₂CF₂CF₃; -CF₂CH₂CF₂CH₃; -CF₂CH₂CF₂CHF₂; -CF₂CH₂CF₂CH₂F; - CF₂CHFCF₂CF₃; -CF₂CHFCF₂CH₃; -CF₂CHFCF₂CHF₂; -CF₂CHFCF₂CH₂F; - CHFCHFCF₂CF₃; -CHFCHFCF₂CH₃; -CHFCHFCF₂CHF₂; -CHFCHFCF₂CH₂F; - CH₂CH₂CF₂CF₃; -CH₂CH₂CF₂CH₃; -CH₂CH₂CF₂CHF₂; -CH₂CH₂CF₂CH₂F; - CF₂CF₂CF₂CF₂CF₃; -CH₂CF₂CF₂CF₂CF₃; -CF₂CF₂CF₂CF₂CHF₂; - CH₂CF₂CF₂CF₂CHF₂; -CF₂OCFH₂; -CF₂OCF₂H; -CF₂OCF₃; -CF₂OCF₂CF₃; - CF₂OCF₂CHF₂; -CF₂OCF₂CH₃; -CF₂OCF₂CH₂F; -CF₂OCHFCF₃; -CF₂OCHFCHF₂; - CF₂OCHFCH₃; -CF₂OCHFCH₂F; -CF₂OCH₂CF₃; -CF₂OCH₂CHF₂; -CF₂OCH₂CH₂F; - CH₂OCFH₂; -CH₂OCF₂H; -CH₂OCF₃; -CH₂OCF₂CF₃; -CH₂OCF₂CHF₂; -CH₂OCF₂CH₃; -CH₂OCF₂CH₂F; -CH₂OCHFCF₃; -CH₂OCHFCHF₂; -CH₂OCHFCH₃; - CH₂OCHFCH₂F; -CH₂OCH₂CF₃; -CH₂OCH₂CHF₂; -CH₂OCH₂CH₂F; -CHFOCFH₂; - CHFOCF₂H; -CHFOCF₃; -CHFOCF₂CF₃; -CHFOCF₂CHF₂; -CHFOCF₂CH₃; - CHFOCF₂CH₂F; -CHFOCHFCF₃; -CHFOCHFCHF₂; -CHFOCHFCH₃; - CHFOCHFCH₂F; -CHFOCH₂CF₃; -CHFOCH₂CHF₂; or -CHFOCH₂CH₂F.

More preferably, at least one of R¹ and R² and one of R³ and R⁴ is -CF₃; -CH₂F; -CH₂CF₃; -CF₂CF₃; -CF₂CHF₂; -CH₂CF₂CF₃; -CH₂CF₂CHF₂; -CF₂CF₂CF₃ or -CH₂CF₂CF₂CF₃.

Most preferably, R¹ is -CF₂CHCF₂ and R² is -CH₂CF₂CHF₂.

Most preferably, R³ is -CH₂CF₃; -CH₂CF₂CF₃ or -CH₂CF₂CF₂CF₃ and R⁴ is -CH₃ or - CH₂CF₃.

In a preferred embodiment, m is 2 and x is 2, 3 or 4.

Even more preferably, m is 2; x is 2, 3 or 4; R³ is -CH₂CF₃; -CH₂CF₂CF₃ or - CH₂CF₂CF₂CF₃ and R⁴ is -CH₃ or -CH₂CF₃.

### Further embodiments of the electrochemical cell

In an embodiment of the invention, the electrochemical cell comprises:
a) an electrolyte comprising a salt of formula (I): 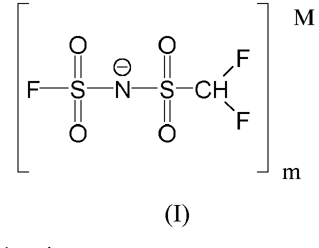 wherein:
   M is an alkali metal cation; and
   the subscript "m" is 1;
   wherein the electrolyte is liquid, gel or solid, and further characterized in that the electrolyte does not comprise a fluorinated ether when the electrolyte is liquid or gel;
   and
b) a metal anode.

In another embodiment of the invention, the electrochemical cell comprises:
a) an electrolyte comprising a salt of formula: 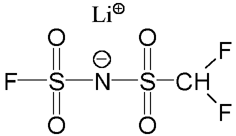 wherein the electrolyte is liquid, gel or solid, and further characterized in that the electrolyte does not comprise a fluorinated ether when the electrolyte is liquid or gel;
   and
b) a lithium metal anode.

In another embodiment of the invention, the electrochemical cell comprises:
a) an electrolyte comprising a salt of formula: 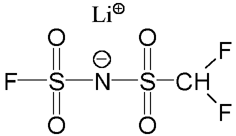 wherein the electrolyte is liquid, gel or solid, and further characterized in that the electrolyte does not comprise a fluorinated ether when the electrolyte is liquid or gel;
   and
b) a lithium metal anode,
   further characterized in that the excluded fluorinated ether is one of formula (I) or (II):

   R¹-O-R² (I)

   R³-(O(CH₂)ₘ)ₓ-O-R⁴ (II)

   wherein:
   R¹, R², R³ and R⁴ are independently a C₁-C₈ alkyl, provided that at least one of R¹ and R² and one of R³ and R⁴ is substituted with at least one fluorine atom;
   m is 1, 2 or 3;
   x is 1, 2, 3, 4, 5, 6, 7, 8, 9 or 10.

In a preferred embodiment, the electrolyte of any of the above further embodiments of the electrochemical cell is a solid electrolyte and further comprises a polymeric composition as defined above throughout the specification.

In another embodiment of the invention, the electrochemical cell comprises:
a) a solid electrolyte comprising a salt of formula: 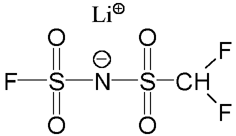 and a polymer which is a polyalkylene oxide, preferably a polyethylene oxide; and
b) a lithium metal anode.

In another embodiment, the electrochemical cell of the invention further comprises a cathode, wherein the cathode material is selected from the group consisting of lithium manganese oxide, lithium nickel oxide, lithium nickel manganese cobalt oxide, lithium nickel manganese oxide, lithium manganese cobalt oxide, lithium copper oxide, lithium copper sulphide, lithium iron phosphate, lithium iron sulphide, lithium manganese iron phosphate and lithium nickel cobalt aluminium oxide.

More preferably, the cathode material is selected from lithium nickel manganese cobalt oxide (also known as NMC cathodes) and lithium iron phosphate (also known as LFP cathodes), such as LiFePO₄.

Specifically, the cathode may additionally contain other additives, such as conductive materials and binders. In a particular embodiment, the cathode comprises LiFePO₄ as active material, a conductive carbon and a polymeric binder; preferably, the cathode consists of LiFePO₄, carbon black as conductive carbon and a polymer or a mixture of a polymer with a lithium salt as a polymeric binder, such as polyethylene oxide and LiFDFSI. It is preferred that the weight ratio between LiFePO₄: conductive carbon: polymeric binder is 63:7:30.

### Electrochemical cell and battery

The electrochemical cell of the first aspect of the invention is particularly useful in electrochemical devices such as electrochemical batteries, particularly secondary electrochemical batteries wherein the cell reactions are reversible. The second aspect of the invention thus relates to battery comprising the electrochemical cell according to the first aspect of the invention.

In a preferred embodiment, the second aspect of the invention relates to a battery comprising the electrochemical cell according to any, preferred or particular, embodiment of the first aspect of the invention defined above.

In a preferred embodiment, the second aspect of the invention relates to a lithium metal battery comprising the electrochemical cell according to those embodiments of the first aspect of the invention defined above in which the anode consists essentially of metallic lithium and in the salt of formula (I) cation M is lithium cation.

In a further preferred embodiment, the second aspect of the invention relates to a lithium metal battery wherein the cathode material is lithium iron phosphate, the anode is metallic lithium and the electrolyte comprises a salt of formula (I) wherein M is a lithium cation.

In a further preferred embodiment, the second aspect of the invention relates to a lithium metal battery wherein the cathode material is lithium iron phosphate, the anode is metallic lithium and the electrolyte comprises a salt of formula (I) wherein M is a lithium cation and a polyalkylene oxide, preferably a polyethylene oxide.

In a further preferred embodiment, the second aspect of the invention relates to lithium metal battery having a charge retention capacity of at least 70%; preferably of at least 75%; and more preferably, of at least 90%, after 100 charging cycles keeping a Coulombic efficiency of at least 95%. In a particular embodiment, the first three cycles were applied at a current of C/20-D/20, and the remaining cycles at C/10-D/10, at a temperature of 70 °C. In another embodiment, the voltage is comprised between 2.7 V and 3.7 V.

The electrochemical cell or battery of the invention may be applied to a variety of electronic devices which may include, but are not limited to: electric motors; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

### Methods for preparing the electrochemical cell or battery

The methods to prepare the electrochemical cell or battery of the present invention will become apparent to the skilled person using common general knowledge. In a preferred embodiment, said method comprises the steps of:
(i) providing a cathode for an electrochemical cell or a battery;
(ii) providing a metal anode for an electrochemical cell or a battery;
(iii) providing an electrolyte as defined in any preferred or particular embodiment of the first aspect of the invention;
(iv) casting a surface of the cathode provided in step (i) and/or a surface of the anode provided in step (ii) with the electrolyte provided in step (iii) in a manner that the electrolyte is arranged between the cathode and the anode such that lithium cations can flow from the cathode to the anode; and
(v) optionally, when the electrolyte is solid or gel and comprises at least one polymer with one or more cross-linkable functional groups and/or cross-linkable monomers, the method further comprises cross-linking the polymer and/or the cross-linkable monomers comprised in the polymer electrolyte.

The cross-linking step (v) may be carried out as described above for the preparation of the electrolyte.

Said optional cross-linking step (v) may be carried out before or after step (iv). It is however preferred that it is carried out after step (iv), as it favours a maximal contact surface between the electrolyte and the electrodes.

Preferred materials for the preparation of the electrochemical cell or battery are as defined in the preferred and particular embodiments of the second aspect of the invention.

### EXAMPLES

The following examples are intended to illustrate but not to limit the disclosed embodiments.

### List of abbreviations

LiFDFSI: (difluoromethanesulfonyl)(fluorosulfonyl) imide lithium salt
KFDFSI: (difluoromethanesulfonyl)(fluorosulfonyl) imide potassium salt
LiTFSI: bis(trifluoromethanesulfonyl)imide lithium salt
LiDFTFSI: (difluoromethanesulfonyl)(trifluoromethanesulfonyl)imide lithium salt
LiDFSI: bis(difluoromethanesulfonyl)imide lithium salt
PEO: polyethylene oxide
rpm: rounds per minute
RT: room temperature

### Example 1: Synthesis of Lithium (Difluoromethanesulfonyl)(Fluorosulfonyl)imide (LiFDFSI)

LiFDFSI was prepared through the nucleophilic addition reaction of sulfamoyl fluoride (FSO₂NH₂) to difluoromethanesulfonyl chloride (CHF₂SO₂Cl).

Firstly, sulfamoyl fluoride was synthesized by the addition of a solution of H₂O in acetone to a dichloromethane solution of sulfamoyl isocyanate which is hydrolyzed to form sulfamoyl fluoride. Then, the coupling between the two fluorinated moieties takes place in a 1:1 molar ratio.

To a solution of sulfamoyl fluoride and 1-methylimidazole in anhydrous acetonitrile at 0 °C, a solution of CHF₂SO₂Cl in anhydrous acetonitrile was added dropwise. After stirring at room temperature for 3 hours, the solvent was evaporated under reduced pressure, the crude was acidified with concentrated HCl and extracted using tert-butyl methyl ether (3 × 20 mL).

The preparation of the potassium salt was carried out by the addition of potassium hydrogen carbonate (KHCO₃) to a solution of the acidic form in EtOH at 0 °C affording KFDFSI as a white powder.

LiFDFSI was synthesized by cation exchange via the reaction between KFDFSI and LiClO₄ in methyl formate.

¹H-NMR (300 MHz, acetone-d6, ppm): δ = 6.44 (t, J = 54.4 Hz, 1H). ¹⁹F-NMR (282 MHz, acetone-d6, ppm): δ = 54.58 (m, F), -125.9 (m, CF2H).

### Example 2: Electrolyte preparation

A solid electrolyte based on PEO polymer matrix was prepared with a constant molar ratio of ethylene oxide (EO): lithium (Li) equal to 20, by the solvent-casting method. In a first step, LiFDFSI was weighted and dissolved in acetonitrile. Then PEO was added to the solution in the appropriate amount and the resulting mixture was left stirring until obtaining a homogeneous solution (approx. 12 h at 300 rpm and RT). Afterwards, the solution was casted in a Teflon mold and the acetonitrile was evaporated at 50 °C under dynamic vacuum. Finally, membranes with a diameter of 16 mm diameter and 100-200 µm thickness were obtained giving rise to Electrolyte B (PEO/LiFDFSI).

For comparative purposes, an electrolyte was prepared in the same conditions as above but using LiTFSI as lithium salt, giving rise to Electrolyte A (PEO/LiTFSI).

### Example 3: Preparation of lithium metal batteries

Lithium metal batteries comprising the electrolytes of Example 2 were prepared according to the following procedure:
Cathode preparation: LiFePO₄ (LFP) cathodes comprising 63 wt% active material, 7 wt% C65 conductive carbon and 30 wt% polymer binder (EO/Li = 20) were prepared by conventional casting method, and the areal loading of active material was ca. 6 mg cm⁻².
Anode provision: Li metal foil (China Energy Lithium, 50 µm thickness).
Cell assembly: Coin cells were assembled in an Argon filled glovebox using LFP (12 mm diameter) electrodes as cathode and prepared as defined above, Electrolyte A and Electrolyte B as separator and Li metal disk (China Energy Lithium, 14 mm diameter and 50 µm thickness) as anode. The polymer electrolyte membrane was placed between both electrodes.

Following this method, the following batteries have been prepared:
1. Battery 1, comprising Electrolyte A
2. Battery 2, comprising Electrolyte B

### Example 4: Electrochemical measurements

The batteries prepared as described in example 3 were cycled galvanostatically between 3.7 V and 2.7 V vs. Li/Li+, using a Maccor Battery Tester (Series 4000). The applied protocol was based on 3 cycles at a current of C/20-D/20, then constant cycling at C/10-D/10 (both charge and discharge) at 70 °C.

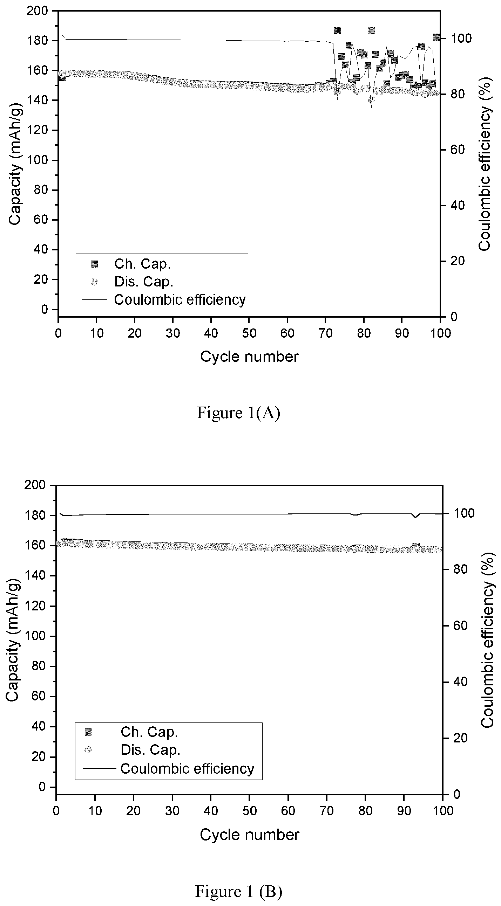

It was observed that the discharge specific capacity and coulombic efficiency of a battery whose electrolyte contains LiFDFSI according to the invention were maintained for at least 100 cycles, whereas a cell containing the salt LiTFSI showed lower discharge capacity and coulombic efficiency (Figure 1).

### Example 5: Ionic conductivity measurements

Liquid electrolytes were prepared by dissolving different lithium salts as depicted in table below, including LiFDFSI, in dimethoxyethane (DME) in a concentration 1M. Inside a glove box, the appropriate amount of the lithium salt was weight in a vials followed by the addition of the appropriate amount of solvent.

**Table 1 below shows the ionic conductivity values of 1M lithium salt in 1,2-dimethoxyethane (DME) as solvent.**

| Electrolyte (Li salt in DME) | Ionic conductivity (S/cm) |
|---|---|
| LiFDFSI | 1.6 · 10⁻² |
| LiDFTFSI | 1.4 · 10⁻² |
| LiTFSI | 1.1 · 10⁻² |
| LiDFSI | 7.0 · 10⁻³ |

It can be observed that the lithium salt of formula (I) present in the electrolyte of the invention provides a better ionic conductivity when compare to other similar lithium salts having difluorinated or trifluorinated groups.

### Example 6: Thermal decomposition measurements

The thermal decomposition of the Electrolyte B (PEO/LiFDFSI) was measured. Also, for comparative purposes, an electrolyte was prepared in the same conditions as Electrolyte B but using LiFSI as lithium salt, giving rise to Electrolyte C (PEO/LiFSI).

A thermogravimetric analyser [TG 209F1 Libra NETSCH] was used to determine the thermal stability of the electrolyte. The samples were placed in an alumina crucible and heated from room temperature (ca. 25 °C) to 600 °C at a heating rate of 10 °C min⁻¹ under argon flow. The decomposition temperature (Td) was determined as a mass loss of 5% with respect to the initial weight.

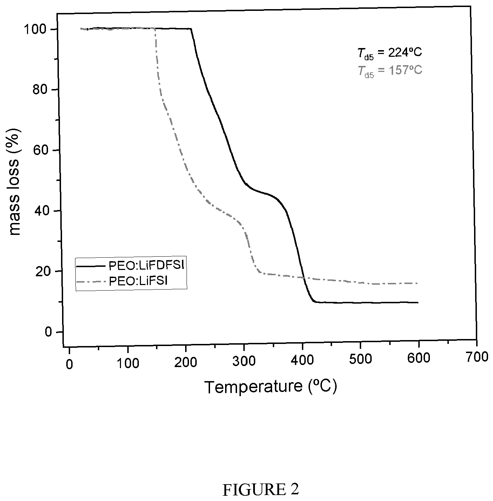

Figure 2 shows the thermogravimetric analysis and decomposition temperature (5% mass loss) of said electrolytes in a EO/Li ratio of 20:1. As can be observed, the electrolyte having LiFDFSI as lithium salt presents more thermal stability than the one having LiFSI.

**This patent application is part of the R&D project PID2022-143003OB-I00 funded by MICIU/AEI/10.13039/501100011033 and by EDRF/EU.**

## Claims

1. An electrochemical cell comprising:
a) an electrolyte comprising a salt of formula (I): 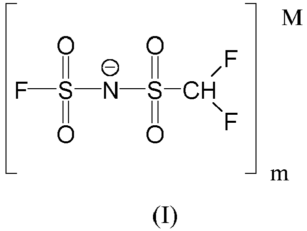 wherein:
M is a metal cation; and
the subscript "m" is a positive integer number that refers to the number of anions needed to neutralize the charge of the cation M;
wherein the electrolyte is liquid, gel or solid, and further **characterized in that** the electrolyte does not comprise a fluorinated ether when the electrolyte is liquid or gel;
and
b) a metal anode.

2. The electrochemical cell according to claim 1, wherein M is an alkali metal cation selected from Li⁺, Na⁺, K⁺ and Cs⁺.

3. The electrochemical cell according to claim 1 or 2, wherein M is Li⁺.

4. The electrochemical cell according to any one of the preceding claims, wherein the electrolyte is a solid or gel electrolyte, preferably a solid electrolyte, and it further comprises a polymeric composition, wherein the polymeric composition comprises: (i) at least one polymer, optionally comprising one or more-cross-linkable functional groups, and/or (ii) cross-linkable monomers.

5. The electrochemical cell according to claim 4, wherein the polymeric composition is a polymer which is a polyalkylene oxide.

6. The electrochemical cell according to claims 1 to 3, wherein the fluorinated ether has formula (I) or (II):
R¹-O-R² (I)
R³-(O(CH₂)ₘ)ₓ-O-R⁴ (II)
wherein:
R¹, R², R³ and R⁴ are independently a C₁-C₈ alkyl, provided that at least one of R¹ and R² and one of R³ and R⁴ is substituted with at least one fluorine atom;
m is 1, 2 or 3;
x is 1, 2, 3, 4, 5, 6, 7, 8, 9 or 10.

7. The electrochemical cell according to claim 6, wherein at least one of R¹ and R² and one of R³ and R⁴ is -CF₃; -CH₂F; -CH₂CF₃; -CF₂CF₃; -CF₂CHF₂; -CH₂CF₂CF₃; - CH₂CF₂CHF₂; -CF₂CF₂CF₃ or -CH₂CF₂CF₂CF₃.

8. The electrochemical cell according to any of the preceding claims, wherein the metal anode is a lithium metal anode or consists essentially of metallic lithium.

9. The electrochemical cell according to any one of the preceding claims, comprising:
a) an electrolyte comprising a salt of formula (I): 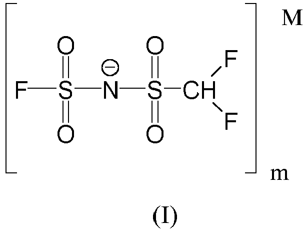 wherein:
M is an alkali metal cation; and
the subscript "m" is 1;
wherein the electrolyte is liquid, gel or solid, and further **characterized in that** the electrolyte does not comprise a fluorinated ether when the electrolyte is liquid or gel;
and
b) a metal anode.

10. The electrochemical cell according to any of the preceding claims, comprising:
a) an electrolyte comprising a salt of formula: 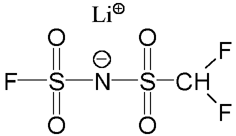 wherein the electrolyte is liquid, gel or solid, and further **characterized in that** the electrolyte does not comprise a fluorinated ether when the electrolyte is liquid or gel;
and
b) a lithium metal anode.

11. The electrochemical cell according to any of the preceding claims, comprising:
a) a solid electrolyte comprising a salt of formula: 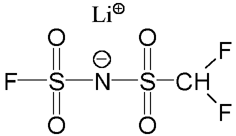 and a polymer which is a polyalkylene oxide, preferably a polyethylene oxide;
and
b) a lithium metal anode.

12. The electrochemical cell according to any of the preceding claims, further comprising a cathode selected from lithium manganese oxide, lithium nickel oxide, lithium nickel manganese cobalt oxide, lithium nickel manganese oxide, lithium manganese cobalt oxide, lithium copper oxide, lithium copper sulphide, lithium iron phosphate, lithium iron sulphide, lithium manganese iron phosphate and lithium nickel cobalt aluminium oxide.

13. The electrochemical cell according to claim 12, wherein the cathode material is selected from lithium nickel manganese cobalt oxide and lithium iron phosphate.

14. An electrochemical battery comprising the electrochemical cell as defined in any one of claims 1 to 13.

15. Use of the electrochemical cell or battery as defined in any one of the preceding claims in electric motors; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; and electric power storage systems.
